# EUROPÄISCHE PATENTSCHRIFT

(11) **EP 1 428 758 B1**
(45) Veröffentlichungstag und Bekanntmachung des Hinweises auf die Patenterteilung: **19.04.2006**
(21) Anmeldenummer: 04004628.6
(22) Anmeldetag: 15.05.2002
(51) Int. Cl.: B65B 37/04, B65G 47/14

(54) **Vorrichtung zum Sortieren und zum Weitertransport von Schüttgut**
Apparatus for sorting and conveying bulk material
Dispositif pour trier et transporter des matériaux en vrac

(30) Priorität: 02.08.2001 DE 10137843
(43) Veröffentlichungstag der Anmeldung: 16.06.2004
(62) Teilanmeldung aus: 02010793.4
(73) Patentinhaber: UHLMANN PAC-SYSTEME GmbH & Co. KG, 88471 Laupheim (DE)
(72) Erfinder: Gertitschke, Detlev, Dipl.-Ing., 88471 Laupheim (DE); Heim, Ralf, 89194 Schnürpflingen (DE); Pöhler, Hans-Martin, 89150 Laichingen (DE); Matzenmüller, Jürgen, 88416 Bellamont (DE); Zoller, Bernd, 88471 Laupheim (DE); Jans, Erich, 88483 Burgrieden-Roth (DE); Litke, Harald, 88480 Achstetten (DE)
(74) Vertreter: Hentrich, Swen

(56) Entgegenhaltungen:
- DE-A- 2 350 755
- GB-A- 373 026
- GB-A- 1 120 173

## Beschreibung

Die Erfindung betrifft eine Kombination eines einer Vorsortierung der Einzelteile von Schüttgut dienenden Vorratsbehälters für eine Vorrichtung zum Sortieren und Weitertransport des Schüttgutes, mit einem dem Vorratsbehälter, nämlich dessen Boden, in Transportrichtung nachgeordneten Trichter, wobei der Boden des Vorratsbehälters durch als Rüttelschienen wirkende längsverschiebliche Leisten gebildet ist.

In der Praxis sind Vorrichtungen bekannt, die dazu genutzt werden, in einem Vorratsbehälter gelagertes Schüttgut einzeln und gezielt zu verpacken, also beispielsweise in Tablettenform vorliegende Medikamente aus dem Vorratsbehälter zu entnehmen und in die Näpfe der Blisterbahn zu überführen. Wesentlich ist dabei neben der Leistungsfähigkeit der Vorrichtung, also der Anzahl der Einzelteile des Schüttgutes, die pro Minute aus dem Vorratsbehälter entnommen und in die Näpfe der Blisterbahn übergeben werden können, auch ein störungsfreier zuverlässiger Betrieb, der nicht durch die Form der Einzelteile beeinträchtigt werden soll. Bei bisher bekannten Vorrichtungen ist es aber problematisch, schindelnde Einzelteile zu verarbeiten, also Einzelteile, die eine im wesentlichen bikonvexe Gestalt haben, die es ermöglicht, daß die Einzelteile in den Transportbahnen der bekannten Vorrichtungen sich teilweise überlappen, ablagern und durch die dabei auftretende Keilwirkung einen Einzelteilstau verursachen, der eine Produktionsstörung darstellt und entweder aufwendig beseitigt werden muß oder zu seiner Vermeidung eine geringe Arbeitsgeschwindigkeit der bekannten Vorrichtung erfordert.

Die DE 23 50 755 A1 zeigt eine Füll- und/oder Abfüllmaschine, die für zylinderförmige Tabletten eingesetzt wird, wobei unter dem Vorratsbehälter ein Formierrost angeordnet ist mit geneigt und mit gegenseitigem Abstand angeordneten Stäben, zwischen denen hindurch die Tabletten auf Zählstäbe platziert werden, die auf einen endlos umlaufenden Band angeordnet sind und die Tabletten in Gefäße abgeben, wenn die Zählstäbe am unteren Trumm langlaufen.

Der Erfindung liegt die Aufgabe zugrunde, eine Kombination der eingangs genannten Art so auszubilden, daß deren Leistungsfähigkeit bei der Verarbeitung schindelnder Produkte gesteigert wird.

Diese Aufgabe wird nach der Erfindung bei einem Vorratsbehälter der eingangs genannten Art durch die kennzeichnenden Merkmale des Anspruchs 1 gelöst.

Weitere Vorteile und Wirkungen ergeben sich aus den Merkmalen der Unteransprüche, wonach die Leisten in schwingende Bewegung versetzbar sind, die Leisten mit Durchgangsöffnung versehen sind, die freien Enden der Leisten zumindest einseitig angefast sind und die Leisten mit gegenseitigem Abstand parallel angeordnet sind.

Diese Kombination wird mit Vorteil eingesetzt, wenn der Trichter mit der Trichtermündung in einen Speicherkanal mündet und dessen eine Trichterseitenwand an der Trichtermündung durch eine erste, rotierend antreibbare Scheibe gebildet ist, wobei die erste Scheibe auf ihrer Umfangsfläche gleichmäßig über den Umfang verteilt angeordnete Vertiefungen aufweist und eine der Seitenwände des Speicherkanals zumindest auf einer Teillänge durch die Umfangsfläche der ersten Scheibe gebildet ist. Es erfolgt eine geordnete Übergabe der Einzelteile aus dem Trichter in den Speicherkanal, wobei auch innerhalb des Speicherkanals aufgrund der im Umfang der ersten Scheibe angeordneten Vertiefungen eine definierte Lage und Position der Einzelteile relativ zueinander erhalten bleibt. Die Einzelteile erhalten dadurch keine Möglichkeit, sich zu überlappen und zu verkeilen.

Es ist dabei bevorzugt, wenn die durch die erste Scheibe gebildete Teillänge der Seitenwand des Speicherkanals unmittelbar an die Trichtermündung anschließt. Bei dieser Ausführungsform wird prophylaktisch bereits am Beginn des Speicherkanals eine Keilbildung der Einzelteile unterbunden und nicht erst im weiteren Verlauf des Speicherkanals die korrekte Anordnung der Einzelteile relativ zueinander kontrolliert und gegebenenfalls wieder hergestellt. Möglich ist auch, daß die erste Scheibe um eine im wesentlichen horizontale Achse der durch die Schwerkraft bestimmten Transportrichtung der Einzelteile an der Trichtermündung mit ihrer Umfangsfläche entgegenlaufend rotierend antreibbar ist. Dabei wirkt die erste Scheibe der Schwerkraft entgegen, so daß an die Vertiefungen angelagerte Einzelteile entgegen ihrer Transportrichtung angehoben werden, was zum einen für eine permanente Unruhe der Einzelteile sorgt und insoweit schon einer Keilbildung entgegenwirkt, zum anderen aber auch bei einer bereits erfolgten anfänglichen Keilbildung ein daran beteiligtes Einzelteil nach oben aus diesem Keil wieder entfernt wird, so daß Stauungen auch schnell wieder aufgelöst werden. Mit diesem zusätzlichen Merkmal ist nochmals eine deutliche Leistungssteigerung verbunden.

Als zweckmäßig hat es sich erwiesen, wenn die Vertiefungen als ein in Umfangsrichtung verlaufendes Wellenprofil gestaltet sind. Bei dieser Gestaltung sind Kanten und Spitzen an der Umfangsfläche der ersten Scheibe vermieden, was eine schonende Behandlung der Einzelteile bewirkt, denen Gleitflächen bereitgestellt sind, an denen diese in die Vertiefungen hineingleiten können.

Vorgesehen ist weiterhin, daß Amplitude und Wellenlänge des Wellenprofils an die Form der Einzelteile angepaßt werden können, da so eine formschlüssige Aufnahme der Einzelteile in die Vertiefungen möglich ist, dadurch eine gleichmäßige Kraftübertragung erfolgt und die Zuverlässigkeit der Vorrichtung verbessert wird, auch wenn dadurch die erste Scheibe als Formatteil ausgestaltet ist, das bei einer Änderung der Außenabmessungen der Einzelteile ausgewechselt werden muß.

Die vorstehend genannten Vorteile werden weiterhin gestärkt, wenn in der Umfangsfläche der ersten Scheibe eine in Umfangsrichtung verlaufende, an die Querschnittsgestalt der Einzelteile ausgebildete Nut ausgebildet ist, durch die inbesondere bei schindelnden Einzelteilen das Ausmaß der Krümmung in Querrichtung berücksichtigt werden kann.

Eine weitere Ausführungsform ist dadurch gekennzeichnet, daß an der Trichtermündung die Trichterrückwand durch eine zweite Scheibe gebildet ist, die im wesentlichen parallel zur ersten Scheibe angeordnet und rotierend antreibbar gelagert ist. Diese Scheibe unterstützt die erste Scheibe dabei, in dem vor der Trichtermündung anstehenden Schüttgut eine permanente Unruhe zu erzeugen, die einer Verklumpung entgegenwirkt, wobei es im Sinne eines einfachen konstruktiven Aufbaus günstig ist, wenn die erste Scheibe und die zweite Scheibe koaxial angeordnet sind.

Günstig ist weiterhin, wenn die zweite Scheibe in der zu der ersten Scheibe gleichen Drehrichtung antreibbar ist, da so nicht lediglich die Unruhe innerhalb des Schüttgutes durch die zweite Scheibe verstärkt wird, sondern die erste Scheibe beim Anheben der Einzelteile entgegen der Transportrichtung unterstützt wird.

Weitere Maßnahmen zur Beibehaltung eines einfachen konstruktiven Aufbaus sind dadurch gegeben, daß die erste Scheibe und die zweite Scheibe mit gleicher Winkelgeschwindigkeit antreibbar sind, daß die erste Scheibe und die zweite Scheibe auf einer gemeinsamen Antriebswelle angeordnet sind, wobei sich dann sogar die Möglichkeit bietet, daß die erste Scheibe und die zweite Scheibe einstückig ausgebildet sind.

Die absolute Leistungsfähigkeit der Vorrichtung läßt sich dadurch deutlich steigern, daß deren Eignung zu einem modularen Aufbau ausgenutzt wird, daß also die erste Scheibe eine die Anordnung mehrerer in Achsrichtung paralleler, in Umfangsrichtung verlaufende Vertiefungen ermöglichende Dicke aufweist, und daß die benachbarten Speicherkanäle durch Stege getrennt sind.

Alternativ besteht gleichfalls die Möglichkeit, daß die durch den Vorratsbehälter, den Trichter mit der ersten Scheibe und dem Speicherkanal gebildete Baueinheit zu mehreren vorgesehen ist in einer linearen Anordnung.

Eine kompakte Bauweise ergibt sich dann dadurch, daß in der linearen Anordnung der Baueinheiten die Trichtervorderwand des einen Trichters gebildet ist durch die Trichterrückwand des benachbarten Trichters. Alternativ besteht dabei auch die Möglichkeit, daß mit den linearen Baueinheiten die Trichtervorderwand durch eine feststehende Wand gebildet ist.

Um die erste Scheibe problemlos in die Trichterseitenwand integrieren zu können, ist vorgesehen, daß die eine Trichterseitenwand, der die erste Scheibe zugeordnet ist, einen Seitenwandträger mit einer Ausnehmung für die erste Scheibe aufweist.

Vorteilhaft ist dann, wenn in dem Seitenwandträger zumindest der Anfang des Speicherkanals ausgebildet ist, insbesondere wenn dann der Speicherkanal den Seitenwandträger in zwei Teile teilt, die relativ zueinander zur Anpassung des Speicherkanals an die Größe der Einzelteile verstellbar sind. Dies bietet den zusätzlichen Vorteil, daß bei lagerichtig sukzessive in den Speicherkanal eingeführten Einzelteilen die Gefahr drastisch reduziert ist, daß es nachfolgend noch zu einer Keilbildung kommen kann.

Um den konstruktiven Aufwand gering und die Anzahl der beweglichen Teile klein zu halten, ist weiterhin vorgesehen, daß der die Aufnehmung aufweisende Teil des Seitenwandträgers starr und der andere Teil des Seitenwandträgers in der durch die erste Scheibe ausgezeichneten Ebene verstellbar gelagert ist.

Einer Klumpenbildung der Einzelteile in der Trichtermündung wirkt auch entgegen, wenn in der Trichtermündung der ersten Scheibe gegenüberliegend eine rotierend antreibbare dritte Scheibe angeordnet ist. Günstig ist es dabei, wenn der Drehsinn der dritten Scheibe dem Drehsinn der ersten Scheibe entspricht, da so eine Anlagerung der Einzelteile an den Umfang der ersten Scheibe am Eingang der Trichtermündung unterstützt wird.

Um diesen Effekt zu erzielen, ist es ausreichend, wenn der Durchmesser der dritten Scheibe um mindestens den Faktor 5 kleiner als der Durchmesser der ersten Scheibe ist.

Es hat sich gezeigt, daß die Zuverlässigkeit der Vorrichtung nochmals gesteigert wird, wenn an der Trichtermündung eine Eintrittsöffnung für einen Gasstrom, insbesondere Luftstrom in den Speicherkanal ausgebildet ist. Dieser Gasstrom unterstützt den Transport der Einzelteile durch den Speicherkanal in Transportrichtung, so daß im Speicherkanal ein gleichmäßiger Einzelteilstrom erreicht wird, dem die Möglichkeit fehlt, daß nachfolgende Einzelteile voranlaufende Einzelteile einholen und im Speicherkanal verklemmen.

Eine zusätzliche Verstärkung dieses Effektes ist dadurch möglich, daß an den Speicherkanal an dem der Trichtermündung abgewandten Ende eine Unterdruckquelle angeschlossen ist.

Besonders bevorzugt ist, daß die der ersten Scheibe gegenüberliegende Trichterseitenwand vertikal orientiert ist. Bei dieser Gestaltung ergibt sich eine enge Trichtermündung, in der die Anzahl der Einzelteile, die nebeneinander zur Anlage kommen können, sehr stark begrenzt ist, so daß mögliche Keilbildungen auf wenige Einzelteile, in der Regel auf 2 Einzelteile, begrenzt sind, so daß die Entfernung eines Einzelteils durch die erste Scheibe ausreichend ist, um den Keil und die dadurch verursachte Stauung aufzulösen.

Alternativ besteht auch die Möglichkeit, daß beide Trichterseiten geneigt zur Vertikalen verlaufen, wobei es vorteilhaft ist, wenn die beiden Trichterseitenwände einen Winkel größer als 90° miteinander einschließen. Mit dieser Ausführungsform wird einer Keilbildung dadurch entgegengewirkt, daß die Einzelteile sich bevorzugt flachliegend der Trichtermündung nähern und so nicht die zur Keilbildung erforderliche Orientierung aufweisen. Dieser Effekt wird noch dadurch verstärkt, daß die der ersten Scheibe gegenüberliegende Trichterseitenwand an der Trichtermündung von der ersten Scheibe in einem Bogen weggeführt ist. Dabei ist vorgesehen, daß der Umkehrpunkt der Krümmung der der ersten Scheibe gegenüberliegenden Trichterseitenwand sich oberhalb der Achse der ersten Scheibe befindet, um so sicherzustellen, daß die wirksame Umfangsfläche der ersten Scheibe nicht durch eine Verkürzung des Speicherkanals reduziert wird.

Im folgenden wird die Erfindung an in der Zeichnung dargestellen Ausführungsbeispielen näher erläutert; es zeigen:
- Fig. 1: eine perspektivische, schematische Darstellung der Vorrichtung mit Fülltrichter und Vibrationsrinne,
- Fig. 2: eine schematische, perspektivische Darstellung der Vorrichtung aus Fig. 1 mit in den Trichter eingefülltem Schüttgut,
- Fig. 3: eine Seitenansicht und eine Vorderansicht eines das Schüttgut bildenden Einzelteils,
- Fig. 4: eine schematische Darstellung der Vorgänge beim Einführen der Einzelteile aus dem Vorratsbehälter in zwei parallel angeordnete Trichter,
- Fig. 5: eine Seitenansicht von 3 schindelnden Einzelteilen unterschiedlicher Dicke,
- Fig. 6: einen Längsschnitt durch die erste Scheibe,
- Fig. 7: in einer Vorderansicht die schematische Darstellung der einen Trichterseitenwand und einen Teil einer Seitenwand des Speicherkanals bildenden ersten Scheibe,
- Fig. 8: den Schnitt VIII-VIII aus Figur 7,
- Fig. 9: eine der Figur 7 entsprechende Darstellung einer weiteren Ausführungsform,
- Fig. 10: den Schnitt X-X aus Figur 9,
- Fig. 11: eine der Figur 7 entsprechende Darstellung einer weiteren Ausführungsform, und
- Fig. 12: den Schnitt XII-XII aus Figur 11.

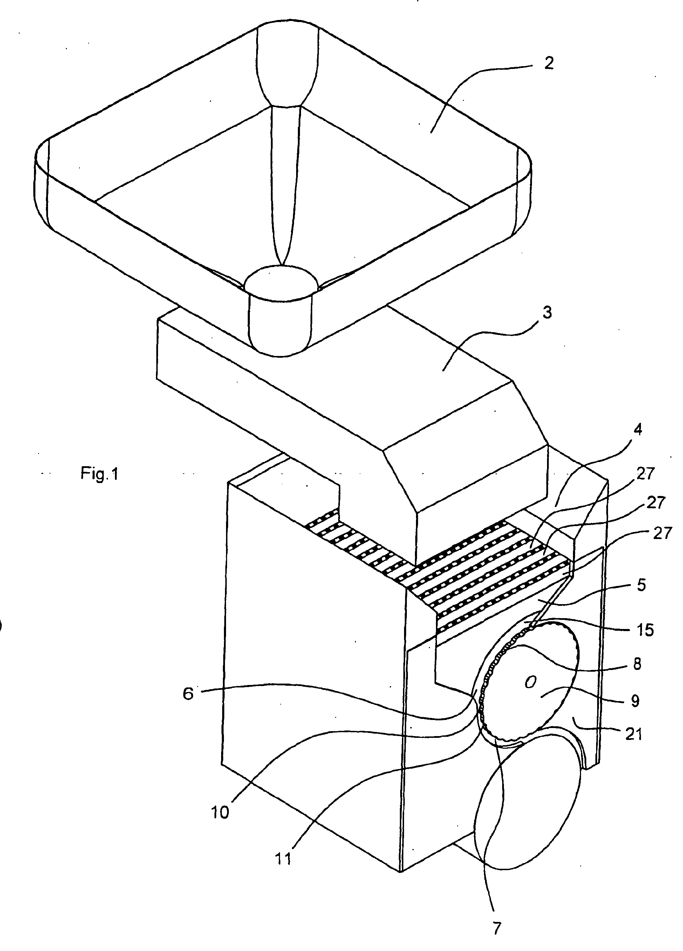

In Figur 1 ist eine Vorrichtung gezeigt, die zum Sortieren und zum Weitertransport von Schüttgut 1 dient, das beispielsweise durch Tabletten, Kapseln, Dragees oder dergleichen gebildet ist. Die Vorrichtung fungiert als Koppelglied, um das unsortiert und ungeordnet angelieferte Schüttgut 1 einzeln verpacken zu können, beispielsweise in selber in der Zeichnung nicht dargestellte Näpfe einer Blisterbahn. Dazu wird das Schüttgut 1 über einen Sammelbehälter 2 und einer daran angeschlossenen Vibrationsrinne 3 mit Fülltrichter einem Vorratsbehälter 4 der Vorrichtung zugeführt, dem in Transportrichtung ein Trichter 5 nachgeordnet ist. Der Trichter 5 mündet mit der Trichtermündung 6 in einen Speicherkanal 7, wobei eine Trichterseitenwand 8 an der Trichtermündung 6 durch eine erste Scheibe 9 gebildet ist.

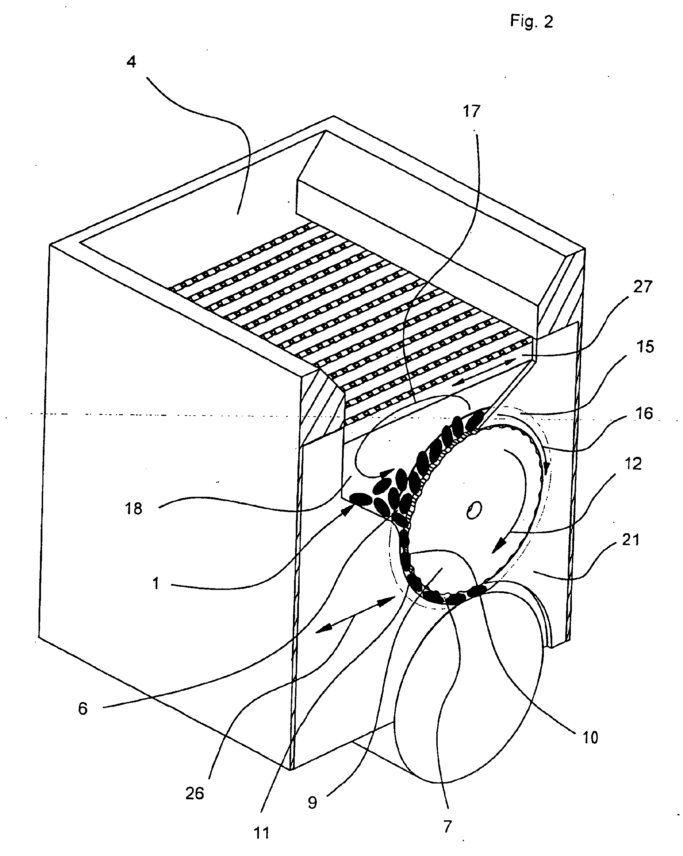

Die erste Scheibe 9 weist auf ihrer Umfangsfläche gleichmäßig über den Umfang verteilt angeordnete Vertiefungen 10 auf und bildet mit ihrer Umfangsfläche neben einem Teil der Trichterseitenwand 8 und auf der Länge des Speicherkanals 7 auch eine von dessen Seitenwänden 11 (Fig. 2).

Die durch die erste Scheibe 9 gebildete Teillänge der Seitenwand 11 des Speicherkanals 7 schließt dabei in den in der Zeichnung dargestellten Ausführungsbeispielen unmittelbar an die Trichtermündung 6 an, wobei die erste Scheibe 9 rotierend antreibbar gelagert ist, und zwar mit einer Drehrichtung, in der die Umfangsfläche der durch die Schwerkraft bestimmten Transportrichtung der Einzelteile im Speicherkanal entgegenläuft, wie durch den Pfeil 12 angedeutet.

Die in der Umfangsfläche der ersten Scheibe 9 ausgebildeten Vertiefungen 10 sind als ein Wellenprofil gestaltet, dessen Amplitude und Wellenlänge an die Form der Einzelteile 13 angepaßt ist, so daß diese Einzelteile 13 in einem Formschluß in diese Vertiefungen 10 aufgenommen werden können, wobei eine gute Passung durch eine in der Umfangsfläche der ersten Scheibe 9 in Umfangsrichtung verlaufende, an die Querschnittsgestalt der Einzelteile 13 angepaßte Nut 14 gefördert ist.

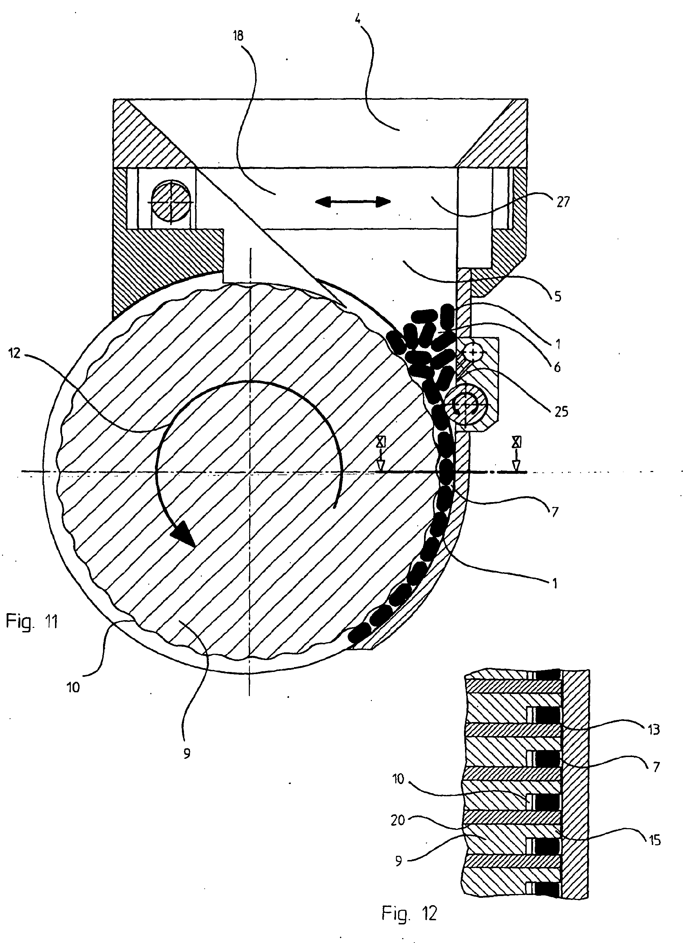

Die Trichterrückwand ist an der Trichtermündung 6 durch eine zweite Scheibe 15 gebildet, die in den gezeigten Ausführungsbeispielen parallel zur ersten Scheibe 9 angeordnet und rotierend antreibbar gelagert ist. Bei den in der Zeichnung in den Figuren 1 und 2 sowie 9 und 12 dargestellten Ausführungsbeispielen sind die erste Scheibe 9 und die zweite Scheibe 15 koaxial zueinander angeordnet, wobei die zweite Scheibe 15 in der zu der ersten Scheibe 9 gleichen Drehrichtung antreibbar ist (Pfeil 16). Die Rotation der ersten Scheibe 9 und der zweiten Scheibe 15 führt dazu, daß die in dem Trichter 5 befindlichen Einzelteile 13 in stetiger Unruhe gehalten werden, wobei sich ein Teilefluß (Pfeil 17) einstellt, da die Einzelteile 13 entgegen der Transportrichtung durch die erste Scheibe 9 und die zweite Scheibe 15 angehoben werden und unter der Wirkung der Schwerkraft wieder zurückfallen.

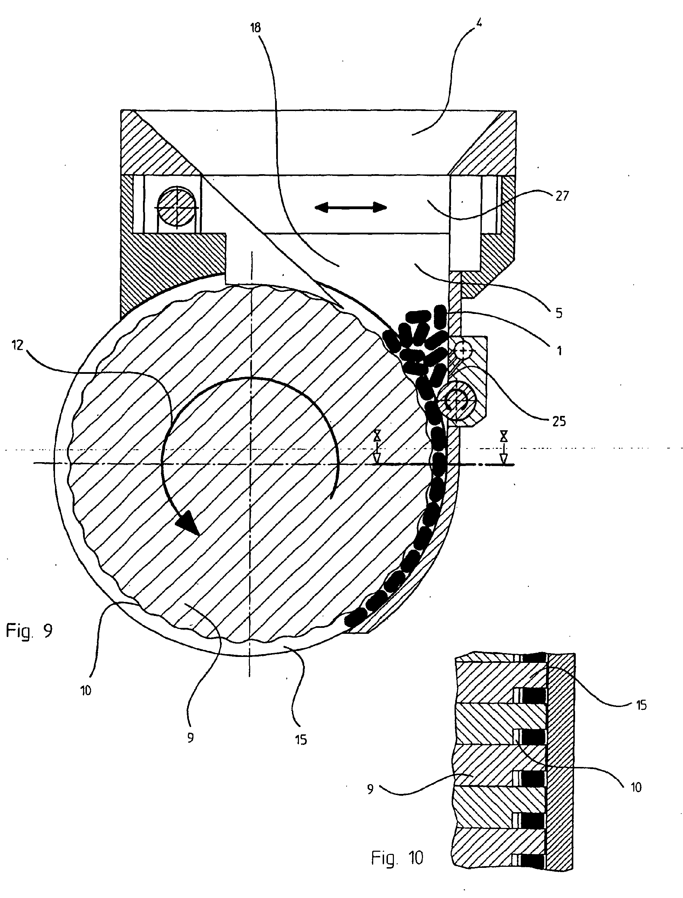

Die erste Scheibe 9 und die zweite Scheibe 15 können mit gleicher Winkelgeschwindigkeit angetrieben werden, wobei sich dann die in den Figuren 9 und 10 dargestellte Ausführungsform anbietet, bei der die erste Scheibe 9 und die zweite Scheibe 15 einstückig ausgebildet sind und durch eine gemeinsame Antriebswelle angetrieben werden.

In Fig. 1 und 2 ist weiterhin zu erkennen, daß die Trichterrückwand in der durch die zweite Scheibe 15 definierten Ebene eine die zweite Scheibe in einer Öffnung aufnehmenden Platte 18 aufweist. Fig. 2 zeigt auch, daß die durch den Vorratsbehälter 4, den Trichter 5 mit der ersten Scheibe 9 und dem Speicherkanal 7 gebildete Baueinheit mehrfach in einer linearen Anordnung vorgesehen ist, wodurch sich aufgrund der modularen Bauweise der Vorrichtung eine an die konkreten Erfordernisse anpaßbare Leistungsfähigkeit ergibt.

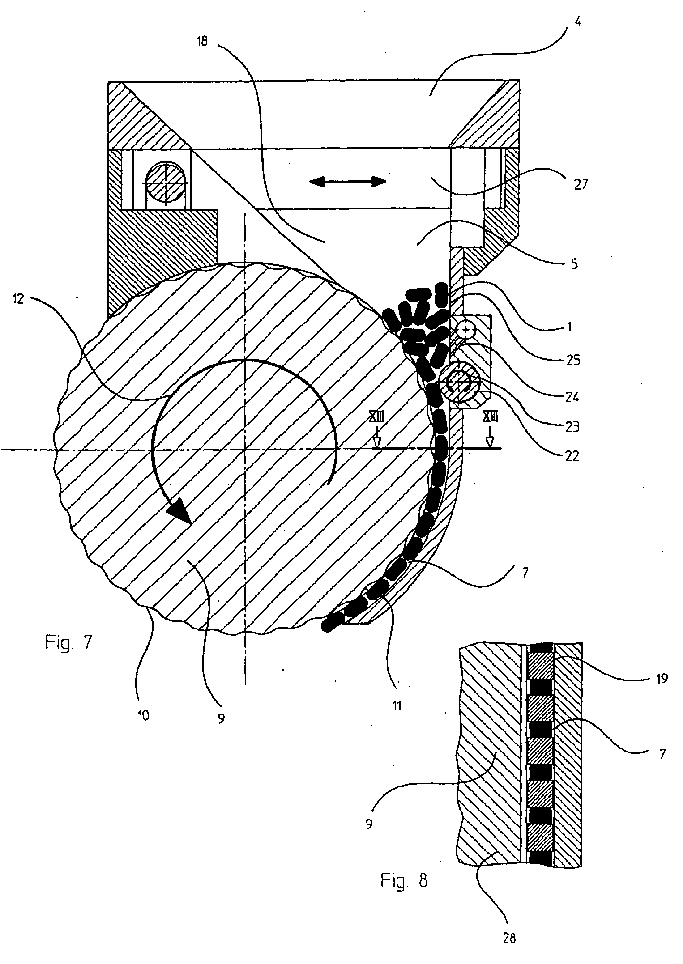

Alternativ ist auch die Realisierung der in den Figuren 7 und 8 gezeigten Ausführungsform möglich, bei der die erste Scheibe 9 eine die Anordnung mehrerer in Achsrichtung paralleler, in Umfangsrichtung verlaufender Vertiefungen 10 ermöglichende Dicke aufweist, wobei dann zur Ausformung der Speicherkanäle Stege 19 vorgesehen sind, deren Funktion bei der in Fig. 9 und 10 gezeigten Ausführungsform durch die zweiten Scheiben 15 übernommen ist.

Eine platzsparende Bauweise ergibt sich, da in der linearen Anordnung der Baueinheiten die Trichtervorderwand des einen Trichters 5 gebildet ist durch die Trichterrückwand des benachbarten Trichters 5, insbesondere der Platte 18 mit der zweiten Scheibe 15, wobei es alternativ aber gleichfalls möglich ist, daß in der linearen Anordnung der Baueinheiten die Trichtervorderwand durch eine feststehende Wand 20 gebildet ist.

Wie wiederum in Fig. 2 dargestellt ist, weist die eine Trichterseitenwand 8, der die erste Scheibe 9 zugeordnet ist, einen Seitenwandträger 21 mit einer Ausnehmung für die erste Scheibe 9 auf, wobei in dem Seitenwandträger 21 zumindest eine Fortführung des Speicherkanals 7 ausgebildet ist, der außerhalb des Seitenwandträgers 21 in einer anderen Vorrichtung weitergeführt sein kann.

Der Speicherkanal 7 teilt den Seitenwandträger 21 in zwei Teile, die relativ zueinander zur Anpassung der Weite des Speicherkanals 7 an die Größe der Einzelteile verstellbar ist. Dabei ist der die Ausnehmung aufweisende Teil des Seitenwandträgers 21 starr und der andere Teil des Seitenwandträgers 21 in der durch die erste Scheibe 9 ausgezeichneten Ebene verstellbar gelagert (Pfeil 26).

Bei den in den Figuren 7 bis 12 dargestellten Ausführungsbeispielen ist in der Trichtermündung 6 der ersten Scheibe 9 gegenüberliegend eine rotierend antreibbare dritte Scheibe 22 angeordnet, deren Drehsinn (Pfeil 23) dem Drehsinn der ersten Scheibe 9 entspricht, die einen Durchmesser aufweist, der mindestens um den Faktor 5 gößer als der Durchmesser der dritten Scheibe 22 ist. Bei diesen Ausführungsformen ist oberhalb der dritten Scheibe 22 an der Trichtermündung 6 eine Eintrittsöffnung 24 für einen Gasstrom, insbesondere Luftstrom in den Speicherkanal 7 ausgebildet, wobei an den Speicherkanal 7, an dem der Trichtermündung 6 abgewandten Ende eine Unterdruckquelle angeschlossen ist, so daß insgesamt der unter der Wirkung der Schwerkraft stattfindende Transport der Einzelteile 13 im Speicherkanal 7 durch den Gasstrom unterstützt wird. Wiederum bei den Ausführungsformen in den Figuren 7 bis 12 ist die der ersten Scheibe 9 gegenüberliegende Trichterseitenwand 25 vertikal orientiert, so daß sich eine enge Trichtermündung 6 ergibt, in der die Einzelteile 13 nicht in großer Anzahl nebeneinander Platz finden.

Demgegenüber ist in den Figuren 1 und 2 ein Ausführungsbeispiel gezeigt, bei der beide Trichterseitenwände 8,25 geneigt zur Vertikalen verlaufen und einen Winkel miteinander einschließen, der größer als 90 ° ist. Dabei ist weiterhin die der ersten Scheibe 9 gegenüberliegende Trichterseitenwand 25 an der Trichtermündung 6 von der ersten Scheibe 9 in einem zum Vorratsbehälter 4 gerichteten Bogen weggeführt, wobei der Umkehrpunkt der Krümmung der der ersten Scheibe 9 gegenüberliegenden Trichterseitenwand 25 sich oberhalb der Achse der ersten Scheibe 9 befindet.

Oberhalb des Trichters 6 sind auf der dem Vorratsbehälter 4 zugewandten Seite Leisten 27 mit Durchgangsöffnungen angeordnet, die in Längsrichtung verschiebbar gelagert sind und den Boden des Vorratsgefäßes 4 bilden. Die freien Enden der Leisten 27 sind dabei zumindest einseitig angefast, um den Eintritt der Einzelteile 13 zwischen den Leisten 27 in den Trichter 6 mit einer ersten Vorsortierung zu fördern.

Bei allen in der Zeichnung dargestellten Ausführungsbeispielen ist ersichtlich, daß der Verlauf des Speicherkanals 7 dem Umfang der ersten Scheibe 9 folgt, zumindest solange, wie die zur Ausnutzung der Schwerkraft erforderliche abwärts gerichtete Komponente gewahrt werden kann.

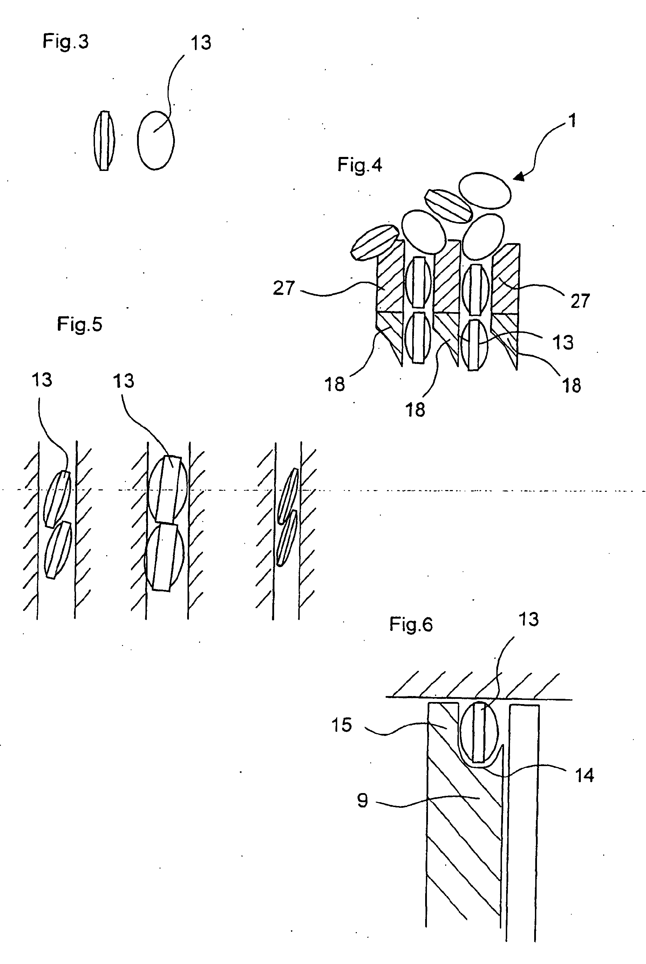

Im folgenden soll die Funktionsweise der Vorrichtung geschildert werden, die ihre besondere Leistungsfähigkeit bei dem Sortieren, Weitertransportieren und Vereinzeln von schindelnden Einzelteilen 13 zeigt, also Einzelteile, die eine im wesentlichen bikonvexe Oberfläche gemäß Fig. 3 aufweisen und sich daher gegenseitig überlagern und in engen Transportwegen verkeilen können (Fig. 3,5). Sofern eine besonders hohe Leistungsfähigkeit der Vorrichtung gewünscht ist, wird in diese die erste Scheibe 9 eingesetzt, deren in Umfangsrichtung ausgebildeten Vertiefungen 10 an die Abmessungen der Einzelteile 13 angepaßt sind, die erste Scheibe 9 also ein Formatteil darstellt, das dann zweckmäßigerweise als Walze 28 ausgebildet ist (Fig. 8), weil so der Wechsel vereinfacht ist.

Dieser Wechsel ist in der Regel aber nicht erforderlich, da auch ohne eine entsprechende Anpassung eine hohe Zuverlässigkeit der Vorrichtung gegeben ist. Dies wird dadurch erreicht, daß der Speicherkanal 7 vor Betriebsbeginn in seiner Breite an die Abmessungen der Einzelteile 13 angepaßt wird, indem der Seitenwandträger 21 entsprechend verstellt wird. Die erste Scheibe 9 sowie die zweite Scheibe 15 werden in Rotation versetzt, während die auf der Platte 18 angeordneten längsverschieblichen Leisten 27 in schwingende Bewegung versetzt werden. In diesem Betriebszustand ist es möglich, das Schüttgut 1 mit seinen Einzelteilen 13 durch die Vibrationsrinnen mit Fülltrichter in den Vorratsbehälter 4 zu füllen, aus dem die Einzelteile 13 durch die Leisten 27 vorsortiert in den Trichter 5 transportiert werden. In diesem Trichter 5 fallen die Einzelteile zur Trichtermündung 6, wobei die Einzelteile 13, die Kontakt mit den Vertiefungen 10 der Umfangsfläche der ersten Scheibe 9 sowie mit der Seitenfläche der zweiten Scheibe 15 erhalten, entgegen der Transportrichtung angehoben werden, was zu einem durch den Pfeil 17 symbolisierten Effekt führt, der die Einzelteile 13 in stetiger Unruhe hält und der Ausbildung von Verkeilungen entgegenwirkt. Die Einzelteile 13, bei denen die Reibung bzw. der Formschluß mit der ersten Scheibe 9 für ein Anheben nicht ausreicht, treten in den Speicherkanal 7 ein und durchqueren diesen unter der Wirkung der Schwerkraft, wobei die in der ersten Scheibe 9 ausgebildeten Vertiefungen 10 verhindern, daß in dem Speicherkanal 7 sich mehrere schindelnde Einzelteile 13 überlappen. Sollten sich doch unter ungünstigen Bedingungen Überlappungen ausbilden, die zu einem Verkeilen innerhalb des Speicherkanals 7 und der daraus resultierenden Rückstauung der Einzelteile 13 im Trichter 5 führen könnten, werden diese Überlappungen durch die rotierende erste Scheibe 9 und zweite Scheibe 15 wieder aufgelöst. Der Transport der Einzelteile 13 durch den Speicherkanal 7 wird weiterhin dadurch gefördert, daß an der Trichtermündung der Gasstrom in Transportrichtung in den Speicherkanal 7 eingeblasen wird und zusätzlich an dem gegenüberliegenden Ende eine Verbindung zu der Vakuumquelle besteht.

Da sowohl in der Trichtermündung 6 als auch im Speicherkanal 7 eine Klumpenbildung, Keilwirkung oder dergleichen von Einzelteilen 13 verhindert ist, stehen am Ende des Speicherkanals 7 die Einzelteile 13 des Schüttgutes 1 auch vereinzelt zur weiteren Verarbeitung, insbesondere zum Abpacken zur Verfügung.

## Patentansprüche

1. Einer Vorsortierung der Einzelteile (13) von Schüttgut (1) dienender Vorratsbehälter (4) für eine Vorrichtung zum Sortieren und Weitertransport des Schüttgutes (1), wobei der Boden des Vorratsbehälters (4) durch als Rüttelschienen wirkende längsverschiebliche Leisten (27) gebildet ist, **dadurch gekennzeichnet, daß** dem Vorratsbehälter (4), nämlich dessen Boden, in Transportrichtung ein Trichter (5) nachgeordnet ist, und daß die Leisten (27) auf Platten (18) angeordnet sind, die eine Trichterrückwand bilden.

2. Vorratsbehälter nach Anspruch 1, **dadurch gekennzeichnet, daß** die Leisten (27) in schwingende Bewegung versetzbar sind.

3. Vorratsbehälter nach Anspruch 1 oder 2, **dadurch gekennzeichnet, daß** die Leisten (27) mit Durchgangsöffnungen versehen sind.

4. Vorratsbehälter nach einem der Ansprüche 1 bis 3, **dadurch gekennzeichnet, daß** die freien Enden der Leisten (27) zumindest einseitig angefast sind.

5. Vorratsbehälter nach einem der Ansprüche 1 bis 4, **dadurch gekennzeichnet, daß** die Leisten (27) mit gegenseitigem Abstand parallel angeordnet sind.

## Claims

1. A storage container (4) serving for preliminary sorting of the individual items (13) of bulk articles (1), for an apparatus for sorting and further transporting the bulk articles (1), wherein the bottom of the storage container (4) is formed by longitudinally displaceable slats (27) acting as shaker bars, **characterised in that** a hopper (5) is arranged downstream of the storage container (4), namely the bottom thereof, in the transport direction, and that the slats (27) are arranged on plates (18) which form a hopper rear wall.

2. A storage container according to claim 1 **characterised in that** the slats (27) can be displaced in a swinging movement.

3. A storage container according to claim 1 or claim 2 **characterised in that** the slats (27) are provided with through openings.

4. A storage container according to one of claims 1 to 3 **characterised in that** the free ends of the slats (27) are bevelled at least at one side.

5. A storage container according to one of claims 1 to 4 **characterised in that** the slats (27) are arranged parallel at a mutual spacing.

## Revendications

1. Réservoir d'alimentation (4) servant à trier des éléments individuels (13) d'une marchandise en vrac (1) pour un dispositif de triage et de transport de celle-ci, le fond du réservoir d'alimentation (4) étant constitué par des barrettes (27) à coulissement longitudinal fonctionnant comme des rails à secousses, **caractérisé en ce qu'**en aval, par rapport à la direction de transport, du réservoir d'alimentation (4), notamment de son fond, est disposé un entonnoir (5), et que les barrettes (27) sont montées sur des plaques (18) formant une paroi arrière d'entonnoir.

2. Réservoir d'alimentation selon la revendication 1, **caractérisé en ce que** les barrettes (27) se déplacent selon un mouvement oscillant.

3. Réservoir d'alimentation selon la revendication 1 ou 2, **caractérisé en ce que** les barrettes (27) présentent des ouvertures de passage.

4. Réservoir d'alimentation selon une des revendications 1 à 3, **caractérisé en ce que** les extrémités libres des barrettes (27) sont biseautées au moins d'un côté.

5. Réservoir d'alimentation selon une des revendications 1 à 4, **caractérisé en ce que** les barrettes (27) sont parallèles et espacées.
